# EUROPÄISCHE PATENTSCHRIFT

(11) **EP 4 262 342 B1**
(45) Veröffentlichungstag und Bekanntmachung des Hinweises auf die Patenterteilung: **19.11.2025**
(21) Anmeldenummer: 21836351.3
(22) Anmeldetag: 02.12.2021
(51) Int. Cl.: A01C 21/00, A01C 7/06, A01C 7/04, A01C 7/18, A01C 7/10

(54) **VERFAHREN ZUM ABSTIMMEN DES BETRIEBS EINER VEREINZELUNGSEINRICHTUNG UND DES BETRIEBS EINER PORTIONIEREINRICHTUNG AUFEINANDER UND EIN KALIBIERSYSTEM**
METHOD FOR MATCHING THE OPERATION OF AN INDIVIDUALIZING DEVICE AND THE OPERATION OF A PORTIONING DEVICE TO EACH OTHER AND A CALIBRATION SYSTEM
PROCÉDÉ POUR ADAPTER L'UN À L'AUTRE LE FONCTIONNEMENT D'UN DISPOSITIF D'INDIVIDUALISATION ET LE FONCTIONNEMENT D'UN DISPOSITIF DE PORTIONNEMENT ET UN SYSTÈME DE CALANDRAGE

(30) Priorität: 17.12.2020 DE 102020133886
(43) Veröffentlichungstag der Anmeldung: 25.10.2023
(73) Patentinhaber: Amazonen-Werke H. Dreyer SE & Co. KG, 49205 Hasbergen (DE)
(72) Erfinder: DREYER, Justus, 49078 Osnabrück (DE); JOHANNABER, Stefan Jan, 49536 Lienen (DE); TECKEMEYER, Stephan, 49504 Lotte (DE); HILBERT, Florenz, 48282 Emsdetten (DE); TRENTMANN, Markus, 49134 Wallenhorst (DE)
(74) Vertreter: Pelster Behrends Patentanwälte PartG mbB
(86) Internationale Anmeldenummer: PCT/EP2021/084044
(87) Internationale Veröffentlichungsnummer: WO 2022/128516

(56) Entgegenhaltungen:
- EP-A1- 2 342 966
- WO-A1-2019/236990
- US-A1- 2004 231 575
- US-A1- 2018 014 457

## Beschreibung

Die Erfindung ist ein Verfahren zum Abstimmen des Betriebs einer Vereinzelungseinrichtung und des Betriebs einer Portioniereinrichtung einer landwirtschaftlichen Ausbringmaschine aufeinander gemäß des Patentanspruchs 1 und ein Kalibriersystem für eine landwirtschaftliche Ausbringmaschine gemäß des Patentanspruchs 14.

Zum gleichzeitigen Ausbringen von vereinzelten Saatkörnern und Düngerportionen auf eine landwirtschaftliche Nutzfläche werden vermehrt landwirtschaftliche Ausbringmaschinen eingesetzt, deren Ausbringaggregate über eine Vereinzelungseinrichtung zum Vereinzeln von Saatkörnern und eine Portioniereinrichtung zum Erzeugen von Düngerportionen verfügen.

Düngerportionen, welche mittels einer Portioniereinrichtung einer landwirtschaftlichen Ausbringmaschine erzeugt werden, können in Abhängigkeit der Düngereigenschaften unterschiedliche maschineninterne Förderdauern in der Ausbringmaschine und/oder unterschiedliche maschinenexterne Flugdauern nach der Abgabe durch die Ausbringmaschine aufweisen. Beispielsweise können die Größe, das Gewicht und die Oberflächenbeschaffenheit der Düngerkörner einen Einfluss auf die maschineninterne Förderdauer der Düngerportion in der Ausbringmaschine und/oder einen Einfluss auf die maschinenexterne Flugdauer der Düngerportion nach der Abgabe durch die Ausbringmaschine haben.

Saatkörner, welche mittels einer Vereinzelungseinrichtung einer landwirtschaftlichen Ausbringmaschine vereinzelt werden, können in Abhängigkeit der Saatguteigenschaften ebenfalls unterschiedliche maschineninterne Förderdauern in der Ausbringmaschine und/oder unterschiedliche maschinenexterne Flugdauern nach Abgabe durch die Ausbringmaschine aufweisen. Beispielsweise können die Größe, das Gewicht und die Oberflächenbeschaffenheit der Saatkörner einen Einfluss auf die maschineninterne Förderdauer eines vereinzelten Saatkorns in der Ausbringmaschine und/oder einen Einfluss auf die maschinenexterne Flugdauer eines vereinzelten Saatkorns nach der Abgabe durch die Ausbringmaschine haben. Beispielsweise kann Beize einen Einfluss auf die maschineninterne Förderdauer und die maschinenexterne Flugdauer von Saatkörnern haben.

Aus der Druckschrift US 2004/231575 A1 ist ein Fluid-Abgabesystem bekannt. Aus der Druckschrift EP 2 342 966 A1 ist eine kombinierte Verteilmaschine bekannt. Aus der Druckschrift WO 2019/236990 A1 ist ein System zur Überwachung von landwirtschaftlichen Operationen bekannt. Aus der Druckschrift US 2018/014457 A1 ist eine Kalibrierung einer Saatgutablageeinrichtung bekannt.

Um mit einer landwirtschaftlichen Ausbringmaschine unterschiedliche Dünger-Saatgut-Kombinationen ausbringen zu können, ist es erforderlich, dass der Betrieb der Vereinzelungseinrichtung und der Betrieb der Portioniereinrichtung im Rahmen eines Kalibriervorgangs aufeinander abgestimmt werden, sodass eine gewünschte örtliche Ablagebeziehung, beispielsweise ein vorgegebener Längsabstand, der Saatkörner und der Düngerportionen auf der landwirtschaftlichen Nutzfläche erzielt wird.

Die der Erfindung zugrundeliegende Aufgabe besteht somit darin, die Einstellung einer vorgegebenen örtlichen Ablagebeziehung von Saatkörnern und Düngerportionen bei unterschiedlichen Dünger-Saatgut-Kombinationen mit einer landwirtschaftlichen Ausbringmaschine zu ermöglichen.

Die Aufgabe wird gelöst durch ein Verfahren der eingangs genannten Art, wobei mittels eines Detektionssystems zumindest ein Kornpräsenzzeitpunkt eines vereinzelten Saatkorns an einem Korndetektionsort und zumindest ein Portionspräsenzzeitpunkt einer erzeugten Düngerportion an einem Portionsdetektionsort erfasst wird. Im Rahmen des erfindungsgemäßen Verfahrens gibt ein mit der Vereinzelungseinrichtung und/oder der Portioniereinrichtung signalleitend verbundenes Steuerungssystem zur Erzielung der vorgegebenen örtlichen Ablagebeziehung von Saatkörnern und Düngerportionen der Vereinzelungseinrichtung und/oder der Portioniereinrichtung zumindest temporär ein Betriebsverhalten vor, welches das Steuerungssystem auf Grundlage des zumindest einen erfassten Kornpräsenzzeitpunkts und des zumindest einen erfassten Portionspräsenzzeitpunkts ermittelt.

Über den erfassten Kornpräsenzzeitpunkt und/oder den erfassten Portionspräsenzzeitpunkt können beispielsweise die maschineninterne Förderdauer und/oder Fördergeschwindigkeit und/oder die maschinenexterne Flugdauer und/oder Fluggeschwindigkeit des vereinzelten Saatkorns und/oder der erzeugten Düngerportion erfasst und zur Abstimmung des Betriebs der Vereinzelungseinrichtung und des Betriebs der Portioniereinrichtung aufeinander genutzt werden. Durch die zumindest temporäre Vorgabe eines Betriebsverhaltens für die Vereinzelungseinrichtung und/oder die Portioniereinrichtung durch das Steuerungssystem wird die vorgegebene örtliche Ablagebeziehung trotz der saatgutspezifischen maschineninternen Förderdauer der vereinzelten Saatkörner in der Ausbringmaschine und/oder der saatgutspezifischen maschinenexternen Flugdauer der vereinzelten Saatkörner nach Abgabe durch die Ausbringmaschine sowie der düngerspezifischen maschineninternen Förderdauer der erzeugten Düngerportionen in der Ausbringmaschine und/oder der düngerspezifischen maschinenexternen Flugdauer der erzeugten Düngerportionen nach der Abgabe durch die Ausbringmaschine erreicht. Das Abstimmen des Betriebs der Vereinzelungseinrichtung und des Betriebs der Portioniereinrichtung aufeinander kann vor oder während des Ausbringvorgangs erfolgen. Die vorgegebene örtliche Ablagebeziehung kann ein beabsichtigter Längsabstand zwischen den vereinzelten Saatkörnern und den erzeugten Düngerportionen auf der landwirtschaftlichen Nutzfläche sein. Der beabsichtigte Längsabstand kann auch null sein, sodass die vereinzelten Saatkörner und die erzeugten Düngerportionen in Längsrichtung keinen Abstand zueinander aufweisen. Die vereinzelten Saatkörner und die erzeugten Düngerportionen können in unterschiedlichen Ablagetiefen und/oder in Querrichtung beabstandet voneinander abgelegt werden.

Das Steuerungssystem kann eine elektronische Steuereinheit und/oder eine elektronische Bedieneinheit umfassen. Die elektronische Steuereinheit kann Bestandteil der landwirtschaftlichen Ausbringmaschine sein. Die elektronische Steuereinheit kann ein Jobrechner sein, welcher signalleitend mit der Vereinzelungseinrichtung und/oder der Portioniereinrichtung verbunden ist. Die elektronische Steuereinheit kann Steuersignale für die Vereinzelungseinrichtung und/oder die Portioniereinrichtung erzeugen, über welche der Vereinzelungseinrichtung und/oder der Portioniereinrichtung zumindest temporär ein Betriebsverhalten vorgegeben werden kann. Die elektronische Bedieneinheit kann beispielsweise ein Terminal sein.

Das Detektionssystem kann den zumindest einen Kornpräsenzzeitpunkt entweder direkt oder indirekt erfassen. Bei der direkten Erfassung eines Kornpräsenzzeitpunkts wird die tatsächliche Anwesenheit des vereinzelten Saatkorns an dem Korndetektionsort erfasst, beispielsweise mittels eines Kornsensors des Detektionssystems. Die indirekte Erfassung eines Kornpräsenzzeitpunkts erfolgt beispielsweise auf Grundlage einer Erfassung eines spezifischen Betriebszustands der Vereinzelungseinrichtung. Wenn die Vereinzelungseinrichtung einen spezifischen Betriebszustand einnimmt, kann das Detektionssystem darauf schließen, dass sich ein vereinzeltes Saatkorn an einem spezifischen Korndetektionsort befindet. Dieser spezifische Betriebszustand kann beispielsweise die Drehwinkellage eines rotatorisch angetriebenen Vereinzelungselements der Vereinzelungseinrichtung betreffen. Das rotatorisch angetriebene Vereinzelungselement kann eine Vereinzelungsscheibe sein, welche eine Mehrzahl von Kornaufnahmeausnehmungen aufweist. Derartige Vereinzelungsscheiben werden auch als Lochscheibe bezeichnet. Alternativ kann der spezifische Betriebszustand der Vereinzelungseinrichtung auch den Zustand eines Vereinzelungsventils der Vereinzelungseinrichtung betreffen, beispielsweise, wenn die Kornvereinzelung über das Öffnen und Schließen eines Vereinzelungsventils erfolgt. Zum Erfassen des spezifischen Betriebszustands der Vereinzelungseinrichtung kann beispielsweise ein Encoder oder eine Gabellichtschranke oder auch ein Reedschalter eingesetzt werden.

Das Detektionssystem kann den zumindest einen Portionspräsenzzeitpunkt entweder direkt oder indirekt erfassen. Bei der direkten Erfassung eines Portionspräsenzzeitpunkts wird die tatsächliche Anwesenheit der erzeugten Düngerportion an dem Portionsdetektionsort erfasst, beispielsweise mittels eines Portionssensors des Detektionssystems. Die indirekte Erfassung eines Portionspräsenzzeitpunkts erfolgt beispielsweise auf Grundlage einer Erfassung eines spezifischen Betriebszustands der Portioniereinrichtung. Wenn die Portioniereinrichtung einen spezifischen Betriebszustand einnimmt, kann das Detektionssystem darauf schließen, dass sich eine erzeugte Düngerportion an einem spezifischen Portionsdetektionsort befindet. Dieser spezifische Betriebszustand kann beispielsweise die Drehwinkellage eines rotatorisch angetriebenen Portionierelements der Portioniereinrichtung betreffen. Das rotatorisch angetriebene Portionierelement ist ein Portionierflügel welcher während einer Drehbewegung Düngerkörner einsammelt und zu einer Düngerportion zusammenführt. Alternativ kann der spezifische Betriebszustand der Portioniereinrichtung auch den Zustand eines Portionierventils der Portioniereinrichtung betreffen, wenn die Portionsbildung über das Öffnen und Schließen eines Portionierventils erfolgt. Zum Erfassen des spezifischen Betriebszustands der Portioniereinrichtung kann beispielsweise ein Encoder oder eine Gabellichtschranke oder auch ein Reedschalter eingesetzt werden.

Es ist darüber hinaus ein erfindungsgemäßes Verfahren vorteilhaft, bei welchem die von der Vereinzelungseinrichtung vereinzelten Saatkörner zu zeitlich voneinander beabstandeten Kornabgabezeitpunkten von der Vereinzelungseinrichtung, insbesondere in eine Kornförderleitung, abgegeben werden. Alternativ oder zusätzlich werden die von der Portioniereinrichtung erzeugten Düngerportionen zu zeitlich voneinander beabstandeten Düngerabgabezeitpunkten von der Portioniereinrichtung, insbesondere in eine Düngerförderleitung, abgegeben. Über das von dem Steuerungssystem vorgegebene Betriebsverhalten wird vorzugsweise eine Anpassung des Zeitversatzes zwischen den Kornabgabezeitpunkten und den Düngerabgabezeitpunkten veranlasst. Über die Anpassung des Zeitversatzes zwischen den Kornabgabezeitpunkten und den Düngerabgabezeitpunkten wird die örtliche Ablagebeziehung der Saatkörner und der Düngerportionen, insbesondere deren Längsabstand, verändert. Über die Anpassung des Zeitversatzes zwischen den Kornabgabezeitpunkten und den Düngerabgabezeitpunkten erfolgt also eine Anpassung der Abgabetaktung der Vereinzelungseinrichtung und der Abgabetaktung der Portioniereinrichtung aufeinander. Die Vereinzelungseinrichtung weist zum Vereinzeln von Saatkörnern ein rotierend angetriebenes Vereinzelungselement auf. Das Vereinzelungselement wird von einem Antrieb der Vereinzelungseinrichtung angetrieben. Der Antrieb der Vereinzelungseinrichtung kann ein elektromotorischer, pneumatischer oder hydraulischer Antrieb sein. Das vorgegebene Betriebsverhalten kann Steuerungsvorgaben für den Antrieb der Vereinzelungseinrichtung umfassen. Die Portioniereinrichtung weist zum

Erzeugen von Düngerportionen ein rotierend angetriebenes Portionierelement auf. Das Portionierelement wird von einem Antrieb der Portioniereinrichtung angetrieben. Der Antrieb der Portioniereinrichtung kann ein elektromotorischer, pneumatischer oder hydraulischer Antrieb sein. Das vorgegebene Betriebsverhalten kann Steuerungsvorgaben für den Antrieb der Portioniereinrichtung umfassen. Über das von dem Steuerungssystem vorgegebene Betriebsverhalten kann beispielsweise eine temporäre Abweichung von einem beabsichtigten Drehzahlverhältnis des Vereinzelungselements und des Portionierelements veranlasst werden. Durch die temporäre Abweichung von dem beabsichtigten Drehzahlverhältnis des Vereinzelungselements und des Portionierelements wird der Zeitversatz zwischen den Kornabgabezeitpunkten und den Düngerabgabezeitpunkten verändert, sodass beispielsweise ein vorgegebener Längsabstand zwischen den vereinzelten Saatkörnern und den erzeugten Düngerportionen auf der landwirtschaftlichen Nutzfläche eingestellt wird. Alternativ kann die Portioniereinrichtung zum Erzeugen von Düngerportionen auch ein Portionierventil aufweisen, welches beim Öffnen eine Düngerportion abgibt, insbesondere in eine Düngerförderleitung. In diesem Fall entsprechen die Düngerabgabezeitpunkte den Ventilöffnungszeitpunkten. Durch das Anpassen der Ventilöffnungszeitpunkte kann somit ebenfalls der Zeitversatz zwischen dem Kornabgabezeitpunkten und den Düngerabgabezeitpunkten verändert und somit der Längsabstand der Saatkörner und Düngerportionen auf der landwirtschaftlichen Nutzfläche angepasst werden.

In einer besonders bevorzugten Ausführungsform des erfindungsgemäßen Verfahrens erfasst das Detektionssystem zumindest zwei Kornpräsenzzeitpunkte des vereinzelten Saatkorns an voneinander beabstandeten Korndetektionsorten und/oder zumindest zwei Portionspräsenzzeitpunkte der erzeugten Düngerportion an voneinander beabstandeten Portionsdetektionsorten. In diesem Fall ermittelt das Steuerungssystem das der Vereinzelungseinrichtung und/oder der Portioniereinrichtung vorgegebene Betriebsverhalten auf Grundlage der zumindest zwei erfassten Kornpräsenzzeitpunkte und/oder der zumindest zwei erfassten Portionspräsenzzeitpunkte. Durch die Erfassung von zwei Kornpräsenzzeitpunkten an voneinander beabstandeten Korndetektionsorten kann das Steuerungssystem unter Berücksichtigung des Abstands zwischen den zwei Korndetektionsorten die maschineninterne Fördergeschwindigkeit und/oder die maschinenexterne Fluggeschwindigkeit des vereinzelten Saatkorns bestimmen und diese bei der Ermittlung der maschineninternen Förderdauern und/oder der maschinenexternen Flugdauer des vereinzelten Saatkorns verwenden. Durch die Erfassung von zwei Portionspräsenzzeitpunkten an voneinander beabstandeten Portionsdetektionsorten kann das Steuerungssystem unter Berücksichtigung des Abstands zwischen den zwei Portionsdetektionsorten die maschineninterne Fördergeschwindigkeit und/oder die maschinenexterne Fluggeschwindigkeit der erzeugten Düngerportion bestimmen und diese bei der Ermittlung der maschineninternen Förderdauern und/oder der maschinenexternen Flugdauer der erzeugten Düngerportion verwenden. Auf Basis des ermittelten Förder- und/oder Flugverhaltens des vereinzelten Saatkorns und/oder der erzeugten Düngerportion kann das Steuerungssystem dann ein Betriebsverhalten für die Vereinzelungseinrichtung und/oder die Portioniereinrichtung ermitteln, über welches die vorgegebene örtliche Ablagebeziehung von Saatkörnern und Düngerportionen auf der landwirtschaftlichen Nutzfläche erzielt werden kann.

In einer weiteren bevorzugten Ausführungsform des erfindungsgemäßen Verfahrens ermittelt das Steuerungssystem auf Grundlage der zumindest zwei erfassten Kornpräsenzzeitpunkte eine saatgutspezifische maschineninterne Förderdauer des vereinzelten Saatkorns in der Ausbringmaschine, eine saatgutspezifische maschinenexterne Flugdauer des vereinzelten Saatkorns nach der Abgabe durch die Ausbringmaschine und/oder eine einen maschineninternen Förderanteil und einen maschinenexternen Fluganteil umfassende saatgutspezifische Transportdauer. Die ermittelte saatgutspezifische maschineninterne Förderdauer des vereinzelten Saatkorns in der Ausbringmaschine kann sich auf einen Teilabschnitt des maschineninternen Förderpfads oder auf den gesamten maschineninternen Förderpfad beziehen. Die ermittelte saatgutspezifische maschinenexterne Flugdauer des vereinzelten Saatkorns kann sich auf einen Teilabschnitt des maschinenexternen Flugpfads oder auf den gesamten maschinenexternen Flugpfad beziehen. Die ermittelte saatgutspezifische Transportdauer des vereinzelten Saatkorns kann sich auf einen Teilabschnitt des Transportpfads oder auf den gesamten Transportpfad beziehen. Die Korndetektionsorte können innerhalb des maschineninternen Förderpfads des vereinzelten Saatkorns und/oder innerhalb des maschinenexternen Flugpfads des vereinzelten Saatkorns liegen. Das von der Vereinzelungseinrichtung und/oder der Portioniereinrichtung vorgegebene Betriebsverhalten ermittelt das Steuerungssystem auf Grundlage der saatgutspezifischen maschineninternen Förderdauer, der saatgutspezifischen maschinenexternen Flugdauer und/oder der saatgutspezifischen Transportdauer.

In einer weiteren bevorzugten Ausführungsform des erfindungsgemäßen Verfahrens ermittelt das Steuerungssystem auf Grundlage der zumindest zwei erfassten Portionspräsenzzeitpunkte eine düngerspezifische maschineninterne Förderdauer der erzeugten Düngerportion in der Ausbringmaschine, eine düngerspezifische maschinenexterne Flugdauer der erzeugten Düngerportionen nach der Abgabe durch die Ausbringmaschine und/oder eine einen maschineninternen Förderanteil und einen maschinenexternen Fluganteil umfassende düngerspezifische Transportdauer. Die ermittelte düngerspezifische maschineninterne Förderdauer der erzeugten Düngerportionen in der Ausbringmaschine kann sich auf einen Teilabschnitt des maschineninternen Förderpfads oder auf den gesamten maschineninternen Förderpfad beziehen. Die ermittelte düngerspezifische maschinenexterne Flugdauer der erzeugten Düngerportionen kann sich auf einen Teilabschnitt des maschinenexternen Flugpfads oder auf den gesamten maschinenexternen Flugpfad beziehen. Die ermittelte düngerspezifische Transportdauer der erzeugten Düngerportionen kann sich auf einen Teilabschnitt des Transportpfads oder auf den gesamten Transportpfad beziehen. Die Portionsdetektionsorte können innerhalb des maschineninternen Förderpfads der erzeugten Düngerportion und/oder innerhalb des maschinenexternen Förderpfads der erzeugten Düngerportion liegen. Das der Vereinzelungseinrichtung und/oder der Portioniereinrichtung vorgegebene Betriebsverhalten ermittelt das Steuerungssystem auf Grundlage der düngerspezifischen maschineninternen Förderdauer, der düngerspezifischen maschineninternen Flugdauer und/oder der düngerspezifischen Transportdauer.

In einer Weiterbildung des erfindungsgemäßen Verfahrens wird zumindest ein Kornpräsenzzeitpunkt des vereinzelten Saatkorns mittels eines maschineninternen Kornsensors des Detektionssystems erfasst. Der maschineninterne Kornsensor kann beispielsweise ein optischer Sensor sein. Der maschineninterne Kornsensor des Detektionssystems kann ein Opto-Geber sein, welcher die Präsenz des vereinzelten Saatkorns an einem Korndetektionsort erfasst, welcher innerhalb des maschineninternen Förderpfads des vereinzelten Saatkorns liegt. Der maschineninterne Kornsensor kann ein Kornzähler sein. Der maschineninterne Kornsensor kann in oder an der Vereinzelungseinrichtung angeordnet sein. Der maschineninterne Kornsensor erfasst beispielsweise den Kornpräsenzzeitpunkt über ein Detektieren einer spezifischen Winkelstellung eines rotierend angetriebenen Vereinzelungselements der Vereinzelungseinrichtung. Alternativ oder zusätzlich wird zumindest ein Portionspräsenzzeitpunkt der erzeugten Düngerportion über einen maschineninternen Portionssensor des Detektionssystems erfasst. Der maschineninterne Portionssensor kann ein Reedschalter sein. Der maschineninterne Portionssensor kann in oder an der Portioniereinrichtung angeordnet sein. Der maschineninterne Portionssensor erfasst beispielsweise den Portionspräsenzzeitpunkt über ein Detektieren einer spezifischen Stellung eines rotierend angetriebenen Portionierelements der Portioniereinrichtung. Der maschineninterne Kornsensor und/oder der maschineninterne Portionssensor können an oder in der landwirtschaftlichen Ausbringmaschine fest verbaut sein. Das Detektionssystem kann einen oder mehrere weitere sensorische Präsenzdetektoren aufweisen.

In einer anderen bevorzugten Ausführungsform des erfindungsgemäßen Verfahrens werden die zumindest zwei Kornpräsenzzeitpunkte des vereinzelten Saatkorns mittels mehrerer entlang eines maschineninternen Förderpfads des vereinzelten Saatkorns angeordneter maschineninterner Kornsensoren des Detektionssystems erfasst. Die saatgutspezifische maschineninterne Förderdauer des vereinzelten Saatkorns in der Ausbringmaschine, die saatgutspezifische maschinenexterne Flugdauer des vereinzelten Saatkorns nach der Abgabe durch die Ausbringmaschine und/oder die saatgutspezifische Transportdauer der vereinzelten Saatkörner können somit kontinuierlich während der Fahrt gemessen werden. Alternativ oder zusätzlich werden die zuminde st zwei Portionspräsenzzeitpunkte der erzeugten Düngerportionen mittels mehrerer entlang eines maschineninternen Förderpfads der erzeugten Düngerportion angeordneter maschineninterner Portionssensoren des Detektionssystems erfasst. Die düngerspezifische maschineninterne Förderdauer der erzeugten Düngerportion in der Ausbringmaschine, die düngerspezifische maschinenexterne Flugdauer der erzeugten Düngerportion nach der Abgabe durch die Ausbringmaschine und/oder die düngerspezifische Transportdauer der erzeugten Düngerportionen können somit kontinuierlich während der Fahrt erfasst werden. Somit kann das Steuerungssystem während der Fahrt bei Veränderung der Aussaatstärke, der Düngermenge, der Fahrgeschwindigkeit oder bei Veränderung anderer Ausbringparameter direkt auf den neuen Zustand reagieren. Beim Abstimmen der Betriebsverhalten der Portioniereinrichtung und der Vereinzelungseinrichtung aufeinander kann das Steuerungssystem somit beispielsweise auch auf sich verändernde Eigenschaften des Düngers reagieren, beispielsweise auf eine sich im Tagesverlauf verändernde Düngerfeuchtigkeit, welche beispielsweise durch einen Wetterumschwung veranlasst wird. Da in der Regel nicht die komplette Flugdauer bis zum Furchengrund gemessen werden kann, muss die maschinenexterne Flugdauer des vereinzelten Saatkorns bzw. der erzeugten Düngerportion bis zum Aufprall auf den Grund der Düngerfurche bzw. Säfurche vom Steuerungssystem berechnet werden.

In einer Weiterbildung des erfindungsgemäßen Verfahrens wird zumindest ein Kornpräsenzzeitpunkt des vereinzelten Saatkorns und/oder zumindest ein Portionspräsenzzeitpunkt der erzeugten Düngerportion mittels eines Ergänzungssensors des Detektionssystems erfasst. Der Ergänzungssensor kann ein Anbausensor sein. Der Ergänzungssensor kann beispielsweise eine optische Lichtschranke, ein mechanisches Paddel oder ein Prallblech umfassen. Die optische Lichtschranke ist beispielsweise so angebracht, dass das vereinzelte Saatkorn oder die erzeugte Düngerportion sich durch die Lichtschranke bewegt. Das mechanische Paddel kann so angebracht sein, dass das vereinzelte Saatkorn oder die erzeugte Düngerportion das Paddel trifft und auslenkt. Die Messungen mittels des Ergänzungssensors des Detektionssystems können beispielsweise im Stand der Ausbringmaschine vor oder während des Ausbringvorgangs durchgeführt werden. Das Prallblech kann mit einem Prallsensor verbunden sein, welcher die Auslenkung des Prallblechs erfasst. Der Prallsensor kann ein Winkelsensor oder Taster sein. Der Prallsensor kann ein piezoelektrischer Sensor sein. Der Ergänzungssensor kann auf den tatsächlichen Auftreffpunkt in der Furche ausgerichtet sein. Der Ergänzungssensor kann von einem Bediener unter die Auslassöffnung der Kornförderleitung oder unter die Auslassöffnung der Düngerförderleitung gehalten oder dort angebaut sein. Der von dem Ergänzungssensor erfasste Sensorwert kann abgespeichert und/oder zur Berechnung der Gesamttransportzeit des vereinzelten Saatkorns oder der erzeugten Düngerportion verwendet werden.

In einer anderen bevorzugten Ausführungsform des erfindungsgemäßen Verfahrens wird derselbe Ergänzungssensor zeitlich beabstandet zum Erfassen zumindest eines Kornpräsenzzeitpunkts des vereinzelten Saatkorns und zum Erfassen zumindest eines Portionspräsenzzeitpunkts der erzeugten Düngerportion eingesetzt. Somit können Förderdauer, Flugdauer und/oder Transportdauer des vereinzelten Saatkorns und der erzeugten Düngerportion mittels desselben Ergänzungssensors ermittelt werden. Der Ergänzungssensor kann zum Erfassen des Kornpräsenzzeitpunkts an der Kornförderleitung befestigt werden. Der Ergänzungssensor kann zum Erfassen des Portionspräsenzzeitpunkts an der Düngerförderleitung befestigt werden. Wenn der Ergänzungssensor an der Kornförderleitung angebracht ist, kann das Steuerungssystem unter Berücksichtigung der Signale eines maschineninternen Kornsensors im Förderpfad des vereinzelten Saatkorns die Förderdauer des vereinzelten Saatkorns zwischen den beiden Kornpräsenzzeitpunkten ermitteln. Wenn der Ergänzungssensor an der Düngerförderleitung angebracht ist, kann das Steuerungssystem unter Berücksichtigung der Signale eines maschineninternen Portionssensors im Förderpfad der Düngerportion die Förderdauer der erzeugten Düngerportion zwischen den beiden Portionspräsenzzeitpunkten ermitteln. Hinsichtlich der Düngerportionen kann ein Portionsmittelpunkt ermittelt werden, welcher als Referenzpunkt für die Position der Düngerportion dient.

Das erfindungsgemäße Verfahren wird ferner dadurch vorteilhaft weitergebildet, dass ein erster Ergänzungssensor zum Erfassen zumindest eines Kornpräsenzzeitpunkts des vereinzelten Saatkorns und ein zweiter Ergänzungssensor zum Erfassen zumindest einen Portionspräsenzzeitpunkts der erzeugten Düngerportion eingesetzt wird. Die maschineninternen Förderda uern von Saatkorn und Düngerportion werden vorzugsweise gleichzeitig gemessen, um den Längsversatz nach der Ablage auf die landwirtschaftliche Nutzfläche direkt bestimmen zu können. Der erste Ergänzungssensor kann an der Kornförderleitung angeordnet sein. Der zweite Ergänzungssensor kann an der Düngerförderleitung angeordnet sein. Mittels der Ergänzungssensoren kann der Versatz der Ergänzungssensorsignale über mehrere Abgabezyklen erfasst und als Kalibrierfaktor der Maschine zur Verfügung gestellt werden. Werden bei der Messung gleichzeitig die Signale des maschineninternen Kornsensors und des maschineninternen Portionssensors verwendet, müssten die Ergänzungssensoren nicht zwangsläufig in Höhe des jeweiligen Furchengrundes angebracht werden, weil dann die sensorisch nicht erfasste Restflugzeit berechnet werden kann.

Es ist ferner ein erfindungsgemäßes Verfahren vorteilhaft, bei welchem zumindest ein Kornpräsenzzeitpunkt des vereinzelten Saatkorns und/oder zumindest ein Portionspräsenzzeitpunkt der erzeugten Düngerportion mittels einer Kamera des Detektionssystems erfasst wird. Beispielsweise wird mittels der Kamera oder einem anderen Sensor des Detektionssystems ein Kornpräsenzzeitpunkt eines vereinzelten Saatkorns an einem im Endbereich oder außerdem der Kornförderleitung liegenden Korndetektionsort erfasst, kurz bevor das vereinzelte Saatkorn die Kornförderleitung verlässt bzw. nachdem das vereinzelte Saatkorn die Kornförderleitung verlassen hat. Beispielsweise wird mittels der Kamera oder einem anderen Sensor des Detektionssystems ein Portionspräsenzzeitpunkt einer erzeugten Düngerportion an einem im Endbereich oder außerdem der Düngerförderleitung liegenden Portionsdetektionsort erfasst, kurz bevor die erzeugte Düngerportion die Düngerförderleitung verlässt bzw. nachdem die erzeugte Düngerportion die Düngerförderleitung verlassen hat. Auf Basis des Zeitversatzes zwischen dem Kornpräsenzzeitpunkt und dem Portionspräsenzzeitpunkt kann das Steuerungssystem dann ein Betriebsverhalten für die Vereinzelungseinrichtung und/oder die Portioniereinrichtung ermitteln, mit welcher dieser Zeitversatz zwischen dem Kornpräsenzzeitpunkt und dem Portionspräsenzzeitpunkt verändert oder eliminiert wird, sodass sich eine vorgegebene Ablagebeziehung, insbesondere ein vorgegebener Längsabstand, zwischen den vereinzelten Saatkörnern und den Düngerportionen auf der landwirtschaftlichen Nutzfläche einstellt. Die Ausbringmaschine kann sich in einem ordnungsgemäßen Betriebszustand oder in einem ausgehobenen Zustand befinden, wenn kamerabasiert oder mittels eines anderen Sensors des Detektionssystems erfasst wird, wann das Saatkorn und/oder die Düngerportion aus der Kornförderleitung bzw. der Düngerförderleitung austreten oder einen außerdem der Kornförderleitung bzw. der Düngerförderleitung liegenden Korndetektionsort bzw. Portionsdetektionsort passieren.

In einer weiteren bevorzugten Ausführungsform des erfindungsgemäßen Verfahrens wird die Fluggeschwindigkeit des vereinzelten Saatkorns und/oder die Fluggeschwindigkeit der erzeugten Düngerportion mittels einer Kamera des Detektionssystems erfasst. Die Ausbringmaschine kann sich im ausgehobenen Zustand befinden, wenn die Fluggeschwindigkeit des vereinzelten Saatkorns oder die Fluggeschwindigkeit der erzeugten Düngerportion erfasst wird. Die Kamera des Detektionssystems weist beispielsweise eine Aufnahmerate von zumindest 1000 fps auf. Zur Synchronisation des Betriebsverhaltens von Vereinzelungseinrichtung und Portioniereinrichtung kann das Detektionssystem eine virtuelle Projektion des Furchengrundes in das Kamerabild veranlassen. Zusätzlich kann ein Maßstab an der Kornförderleitung und/oder der Düngerförderleitung angebracht sein. Mit diesem Maßstab kann dann die Fluggeschwindigkeit im Moment des Austretens des vereinzelten Saatkorns aus der Kornförderleitung bzw. der erzeugten Düngerportion aus der Düngerförderleitung über mehrere Bilder berechnet werden und der exakte Zeitpunkt bestimmt werden, wann die Düngerportion bzw. das Saatkorn den Boden erreicht. Wenn das vereinzelte Saatkorn und die erzeugte Düngerportion im gleichen Bild aufgezeichnet werden, kann eine Kamera mit einer wesentlich geringeren Aufnahmerate eingesetzt werden, da die Phasenverschiebung als Korrekturfaktor für das Betriebsverhalten von Vereinzelungseinrichtung und Portioniereinrichtung direkt aus den Einzelbildern abgeleitet werden kann.

In einer anderen bevorzugten Ausführungsform des erfindungsgemäßen Verfahrens wird mittels eines Ablagesensors des Detektionssystems der Aufprall des vereinzelten Saatkorns in der Saatfurche als Kornpräsenzzeitpunkt und/oder Aufprall der erzeugten Düngerportion in der Düngerfurche als Portionspräsenzzeitpunkt ermittelt. Der Korndetektionsort ist somit die Saatfurche. Der Portionsdetektionsort ist somit die Düngerfurche. Der Ablagesensor kann ein Lasersensor sein. Bei der Aufprallerfassung mittels des Ablagesensors kann sich die Ausbringmaschine in einem ausgehobenen Zustand befinden. Der Lasersensor kann so ausgerichtet werden, dass das Saatkorn und die Düngerportion den Laserstrahl unterbrechen. Die Düngerportion und das Saatkorn unterbrechen jeweils den Laserstrahl, wenn diese auf den Boden auftreffen würden. Alternativ ist auch eine Umrechnung möglich. Idealerweise wird von der Kornförderleitung in Richtung der Düngerförderleitung gemessen, da das Saatkorn ein kleineres und somit schwieriger zu erfassendes Objekt ist. Über die gemessene Distanz kann dann gefiltert werden, ob es sich bei dem erfassten Objekt um ein Saatkorn oder eine Düngerportion handelt.

Die der Erfindung zugrundeliegende Aufgabe wird ferner durch ein Kalibriersystem der eingangs genannten Art gelöst, wobei das erfindungsgemäße Kalibriersystem ein Detektionssystem aufweist, welches dazu eingerichtet ist, zumindest einen Kornpräsenzzeitpunkt eines vereinzelten Saatkorns an einem Korndetektionsort und zumindest einen Portionspräsenzzeitpunkt einer erzeugten Düngerportion an einem Portionsdetektionsort zu ermitteln. Das Steuerungssystem des erfindungsgemäßen Kalibriersystems ist dazu eingerichtet, zur Erzielung der vorgegebenen örtlichen Ablagebeziehung der Vereinzelungseinrichtung und/oder der Portioniereinrichtung zumindest temporär ein Betriebsverhalten vorzugeben, welches das Steuerungssystem auf Grundlage des zumindest einen erfassten Kornpräsenzzeitpunkts und des zumindest einen erfassten Portionspräsenzzeitpunkts ermittelt.

In einer bevorzugten Ausführungsform ist das erfindungsgemäße Kalibriersystem dazu eingerichtet, das Verfahren zum Abstimmen des Betriebs einer Vereinzelungseinrichtung und des Betriebs einer Portioniereinrichtung aufeinander nach einer der vorstehend beschriebenen Ausführungsformen auszuführen. Hinsichtlich der Vorteile und Modifikationen des erfindungsgemäßen Kalibriersystems wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausbringaggregat, bei welchem der Betrieb der Vereinzelungseinrichtung und der Betrieb der Portioniereinrichtung mittels des erfindungsgemäßen Verfahrens aufeinander abstimmbar sind;
- Fig. 2: ein Ausführungsbeispiel des erfindungsgemäßen Kalibriersystems in einer schematischen Darstellung;
- Fig. 3: ein weiteres Ausführungsbeispiel des erfindungsgemäßen Kalibriersystems in einer schematischen Darstellung; und
- Fig. 4: ein weiteres Ausführungsbeispiel des erfindungsgemäßen Kalibriersystems in einer schematischen Darstellung.

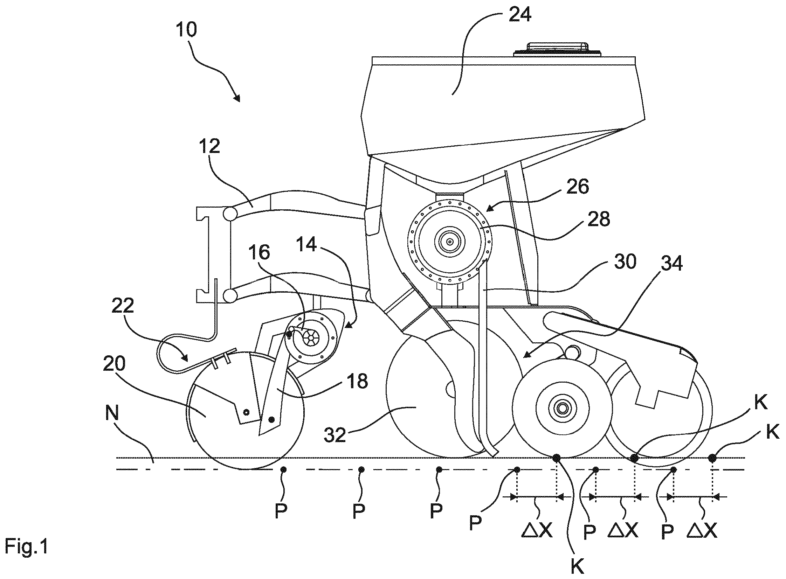

Die Fig. 1 zeigt ein Ausbringaggregat 10 einer landwirtschaftlichen Ausbringmaschine, mittels welcher Dünger in Form von Düngerportionen P und Saatgut in Form von vereinzelten Saatkörnern K in aufeinander abgestimmter Weise auf eine landwirtschaftliche Nutzfläche N ausbringbar sind. Die landwirtschaftliche Ausbringmaschine weist vorzugsweise mehrere der dargestellten Ausbringaggregate 10 auf, welche in Querrichtung, also quer zur Fahrtrichtung, nebeneinander angeordnet sind.

Das dargestellte Ausbringaggregat 10 weist eine Halterung 12 auf, welche ein Parallelogrammgestänge umfasst und mittels welcher das Ausbringaggregat 10 an einem Querträger der landwirtschaftlichen Ausbringmaschine befestigbar ist.

Das Ausbringaggregat 10 weist ferner eine Portioniereinrichtung 14 auf, mittels welcher Düngerportionen P erzeugt werden können. Die Portioniereinrichtung 14 weist einen Antrieb auf, welcher ein als Portionierflügel ausgebildetes Portionierelement 16 rotatorisch antreibt. Der Antrieb der Portioniereinrichtung 14 kann ein elektromotorischer, ein hydraulischer oder pneumatischer Antrieb sein.

Das sich in dem Gehäuse der Portioniereinrichtung 14 drehende Portionierelement 16 sammelt den kontinuierlich in das Gehäuse der Portioniereinrichtung 14 eintretenden Dünger ein und erzeugt somit bei jeder Umdrehung eine Düngerportion P. Die von der Portioniereinrichtung 14 erzeugten Düngerportionen P werden aufgrund der Drehbewegung des Portionierelements 16 zu zeitlich voneinander beabstandeten Düngerabgabezeitpunkten von der Portioniereinrichtung 14 in eine Düngerförderleitung 18 abgegeben. Die Düngerförderleitung 18 ist ein Schusskanal, über welchen die erzeugte Düngerportion P zunächst maschinenintern in Richtung der landwirtschaftlichen Nutzfläche N gefördert wird. Nach dem Verlassen der Düngerförderleitung 18 befindet sich die erzeugte Düngerportion P zunächst in einer Flugphase, bevor die Düngerportion P den Grund einer Düngerfurche erreicht. Die Düngerfurche wird mittels eines Düngeschars 22 erzeugt, wobei das Düngeschar 22 ein zwei Schneidscheiben 20 aufweisendes Doppelscheibenschar sein kann.

Das Ausbringaggregat 10 weist ferner eine Vereinzelungseinrichtung 26 auf, mittels welcher die in dem Vorratsbehälter 24 bevorrateten Saatkörner K vereinzelt werden können. Hierzu weist die Vereinzelungseinrichtung 26 einen Antrieb auf, welcher das als Vereinzelungsscheibe ausgebildete Vereinzelungselement 28 der Vereinzelungseinrichtung 26 rotatorisch antreibt. Der Antrieb der Vereinzelungseinrichtung 26 kann ein elektromotorischer, pneumatischer oder hydraulischer Antrieb sein.

Das als Vereinzelungsscheibe ausgebildete Vereinzelungselement 28 weist Kornaufnahmeausnehmungen auf, welche jeweils ein Saatkorn aufnehmen und somit vereinzeln. Die vereinzelten Saatkörner K werden dann zu zeitlich voneinander beabstandeten Kornabgabezeitpunkten von der Vereinzelungseinrichtung 26 in eine Kornförderleitung 30 abgegeben. Die Kornförderleitung 30 ist ein Schusskanal und dient zum Fördern der vereinzelten Saatkörner K in Richtung der landwirtschaftlichen Nutzfläche N. Nach Verlassen der Kornförderleitung 30 befinden sich die vereinzelten Saatkörner K zunächst in einer Flugphase, bevor diese den Grund einer Säfurche erreichen. Die Säfurche wird über ein oder mehrere Schneidscheiben 32 des Säschars 34 erzeugt.

Die erzeugten Düngerportionen P können in Abhängigkeit der Düngereigenschaften unterschiedliche maschineninterne Förderdauern in der Ausbringmaschine und unterschiedliche maschinenexterne Flugdauern nach der Abgabe durch die Ausbringmaschine aufweisen. Beispielsweise können die Größe, das Gewicht und die Oberflächenbeschaffenheit der Düngerkörner einen Einfluss auf die maschineninterne Förderdauer und die maschinenexterne Flugdauer der Düngerportionen haben. Die vereinzelten Saatkörner K können in Abhängigkeit der Saatguteigenschaften ebenfalls unterschiedliche maschineninterne Förderdauern in der Ausbringmaschine und unterschiedliche maschinenexterne Flugdauern nach der Abgabe durch die Ausbringmaschine aufweisen. Beispielsweise können die Größe, das Gewicht und die Oberflächenbeschaffenheit der Saatkörner K einen Einfluss auf die maschineninterne Förderdauer und die maschinenexterne Flugdauer der vereinzelten Saatkörner K haben.

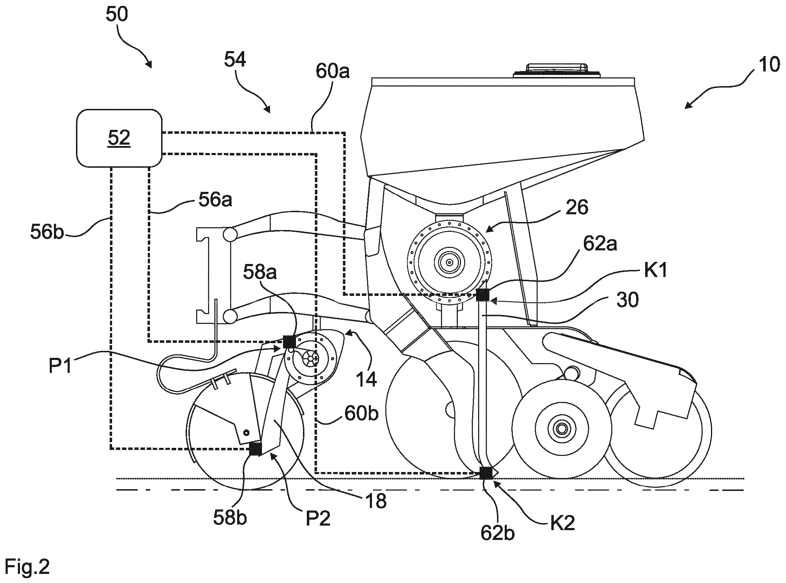

Zur Erzielung einer vorgegebenen örtlichen Ablagebeziehung Δx der Saatkörner K und der Düngerportionen P auf der landwirtschaftlichen Nutzfläche N sind der Betrieb der Vereinzelungseinrichtung 26 und der Betrieb der Portioniereinrichtung 14 aufeinander abzustimmen. Die vorgegebene Ablagebeziehung Δx kann beispielsweise ein vorgegebener Längsabstand zwischen den Düngerportionen P und den Saatkörnern K sein, wobei der vorgegebene Längsabstand auch null sein kann, sodass die vereinzelten Saatkörner K und die erzeugten Düngerportionen P in Längsrichtung keinen Abstand zueinander aufweisen. Zum Anpassen des Längsabstands Δx zwischen den abgelegten vereinzelten Saatkörnern K und den abgelegten erzeugten Düngerportionen P wird der Portioniereinrichtung 14 und/oder der Vereinzelungseinrichtung 26 zumindest temporär ein Betriebsverhalten von einem Steuerungssystem 52 (vgl. Fig. 2 bis 4) vorgegeben. Über das von dem Steuerungssystem 52 vorgegebene Betriebsverhalten für die Portioniereinrichtung 14 und/oder die Vereinzelungseinrichtung 26 wird eine Anpassung des Zeitversatzes zwischen den Kornabgabezeitpunkten an der Vereinzelungseinrichtung 26 und den Düngerabgabezeitpunkten an der Portioniereinrichtung 14 veranlasst. Bei dem dargestellten Ausbringaggregat 10 kann dies dadurch erfolgen, dass über das von dem Steuerungssystem 52 vorgegebene Betriebsverhalten eine temporäre Abweichung von einem beabsichtigten Drehzahlverhältnis des Vereinzelungselements 28 und des Portionierelements 16 veranlasst wird, sodass sich der Längsabstand Δx zwischen den Düngerportionen P und den Saatkörnern K verändert.

In den Fig. 2 bis 4 sind Kalibriersysteme 50 dargestellt, deren Steuerungssysteme 52 einer Portioniereinrichtung 14 und/oder einer Vereinzelungseinrichtung 26 zumindest temporär ein Betriebsverhalten vorgeben, um eine vorgegebene örtliche Ablagebeziehung Δx von Saatkörnern K und Düngerportionen P auf der landwirtschaftlichen Nutzfläche N zu erzielen.

Das der Portioniereinrichtung 14 und/oder der Vereinzelungseinrichtung 26 zumindest temporär vorgegebene Betriebsverhalten ermitteln die Steuerungssysteme 52 auf Grundlage von zwei Kornpräsenzzeitpunkten und zwei Portionspräsenzzeitpunkten. Alternativ ist es denkbar, beispielsweise wenn das Flugverhalten des Saatkorns K und/oder der Düngerportion P als bekannt vorausgesetzt werden kann, dass ein Steuerungssystem 52 das der Portioniereinrichtung 14 und/oder der Vereinzelungseinrichtung 26 zumindest temporär vorgegebene Betriebsverhalten auf Grundlage von zwei Kornpräsenzzeitpunkten ermittelt, ohne dass Portionspräsenzzeitpunkte der Düngerportion berücksichtigt werden. Ferner ist es denkbar, beispielsweise wenn das Flugverhalten des Saatkorns K und/oder der Düngerportion P als bekannt vorausgesetzt werden kann, dass ein Steuerungssystem 52 das der Portioniereinrichtung 14 und/oder der Vereinzelungseinrichtung 26 zumindest temporär vorgegebene Betriebsverhalten auf Grundlage von zwei Portionspräsenzzeitpunkten ermittelt, ohne dass Kornpräsenzzeitpunkte berücksichtigt werden. Außerdem kann ein Steuerungssystem 52 auch nur einen Kornpräsenzzeitpunkt und/oder nur einen Portionspräsenzzeitpunkt beim Ermitteln des Betriebsverhaltens für die Portioniereinrichtung 14 und/oder des Betriebsverhaltens für die Vereinzelungseinrichtung 26 berücksichtigen.

Die Kornpräsenzzeitpunkte betreffen die Zeitpunkte, zu welchen ein vereinzeltes Saatkorn K sich an voneinander beabstandeten Korndetektionsorten K1, K2 befindet. Die Portionspräsenzzeitpunkte betreffen die Zeitpunkte, zu welchen sich eine erzeugte Düngerportion P an voneinander beabstandeten Portionsdetektionsorten P1, P2 befindet. Die zwei Kornpräsenzzeitpunkte und die zwei Portionspräsenzzeitpunkte werden jeweils mittels eines Detektionssystems 54 erfasst.

Das Steuerungssystem 52 ermittelt auf Grundlage der erfassten Kornpräsenzzeitpunkte eine saatgutspezifische maschineninterne Förderdauer des vereinzelten Saatkorns K in der Ausbringmaschine. Die ermittelte saatgutspezifische maschineninterne Förderdauer des vereinzelten Saatkorns K in der Ausbringmaschine bezieht sich auf einen Teilabschnitt des maschineninternen Förderpfads des vereinzelten Saatkorns K, nämlich den Abschnitt zwischen den Korndetektionsorten K1, K2. Das Steuerungssystem 52 ermittelt ferner auf Grundlage der erfassten Portionspräsenzzeitpunkte eine düngerspezifische maschineninterne Förderdauer der erzeugten Düngerportion P in der Ausbringmaschine. Die ermittelte düngerspezifische maschineninterne Förderdauer der erzeugten Düngerportionen P in der Ausbringmaschine bezieht sich auf einen Teilabschnitt des maschineninternen Förderpfads der erzeugten Düngerportion P, nämlich auf den Abschnitt zwischen den Portionsdetektionsorten P1, P2. Das der Vereinzelungseinrichtung 26 und der Portioniereinrichtung 14 vorgegebene Betriebsverhalten ermittelt das Steuerungssystem 52 auf Grundlage der saatgutspezifischen maschineninternen Förderdauer des vereinzelten Saatkorns K und der düngerspezifischen maschineninternen Förderdauer der Düngerportion P.

Die Portionspräsenzzeitpunkte der erzeugten Düngerportion P an den Portionsdetektionsorten P1, P2 werden über maschineneigene Portionssensoren 58a, 58b des Detektionssystems 54 erfasst. Die Kornpräsenzzeitpunkte des vereinzelten Saatkorns K an den Korndetektionsorten K1, K2 werden mittels maschineneigener Kornsensoren 62a, 62b des Detektionssystems 54 erfasst.

Der maschineneigene Portionssensor 58a ist ein Reedschalter, welcher an der Portioniereinrichtung 14 angeordnet ist. Der Portionssensor 58a erfasst den Portionspräsenzzeitpunkt an dem Portionsdetektionsort P1 über ein Detektieren einer spezifischen Winkelstellung des rotierend angetriebenen Portionierelements 16 der Portioniereinrichtung 14. Der Portionssensor 58a stellt dem Steuerungssystem 52 die erfassten Portionspräsenzzeitpunkte über die Leitung 56a zur Verfügung. Der Portionssensor 58b ist ein an der Düngerförderleitung 18 angeordneter optischer Sensor, welcher den Zeitpunkt erfasst, an welchem die erzeugte Düngerportion P aus der Düngerförderleitung 18 austritt. In diesem Fall ist der Portionsdetektionsort P2 folglich die Austrittsöffnung der Düngerförderleitung 18. In alternativen Ausführungsform kann der Portionssensor 58b jedoch auch an einer anderen Stelle entlang des maschineninternen Förderpfads der Düngerportionen angeordnet sein. Der Portionssensor 58b stellt dem Steuerungssystem 52 die erfassten Portionspräsenzzeitpunkte über die Leitung 56b zur Verfügung.

Die Kornsensoren 62a, 62b sind an voneinander beabstandeten Positionen entlang des maschineninternen Förderpfads der vereinzelten Saatkörner K angeordnet. Die Kornsensoren 62a, 62b können als Opto-Geber ausgebildet sein, welche die Präsenz des vereinzelten Saatkorns K an den Korndetektionsorten K1, K2 erfassen. Der Kornsensor 62a kann beispielsweise auch als Körnerzähler eingesetzt werden. Die Kornsensoren 62a, 62b stellen dem Steuerungssystem 52 die erfassten Kornpräsenzzeitpunkte über die Leitungen 60a, 60b zur Verfügung.

Die düngerspezifische maschineninterne Förderdauer der erzeugten Düngerportionen P in der Ausbringmaschine und die saatgutspezifische maschineninterne Förderdauer der vereinzelten Saatkörner in der Ausbringmaschine können über die maschineneigenen Portionssensoren 58a, 58b und die maschineneigenen Kornsensoren 62a, 62b auch während der Fahrt gemessen werden. Somit können während des Ausbringvorgangs auftretende Veränderungen der Förder- und/oder Flugeigenschaften der Düngerportionen P und/oder der Saatkörner K beim Abstimmen des Betriebs der Portioniereinrichtung 14 und der Vereinzelungseinrichtung 26 aufeinander berücksichtigt werden. Die Förder- und/oder Flugeigenschaften der Düngerportionen P und/oder der Saatkörner K können beispielsweise aufgrund eines sich ändernden Feuchtigkeitszustands während des Ausbringvorgangs variieren. Der Feuchtigkeitszustand der Düngerportionen und/oder der Saatkörner kann sich beispielsweise aufgrund eines Wetterumschwungs ändern.

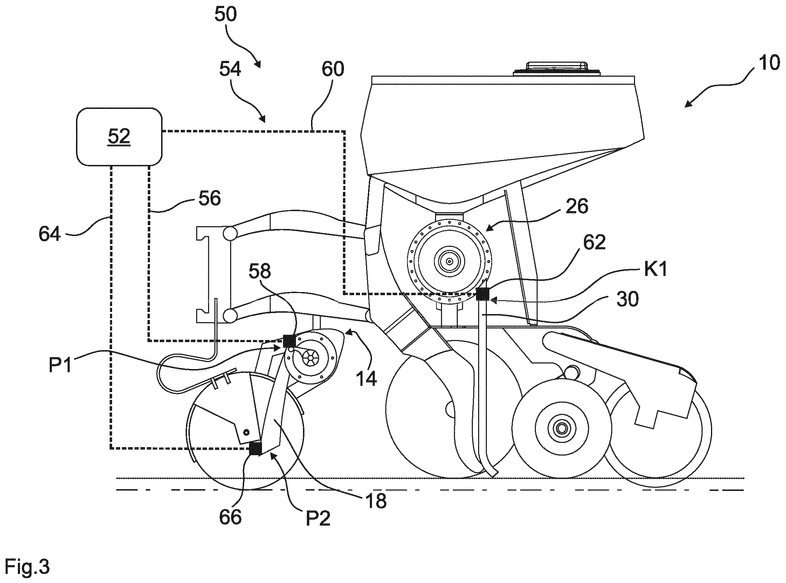

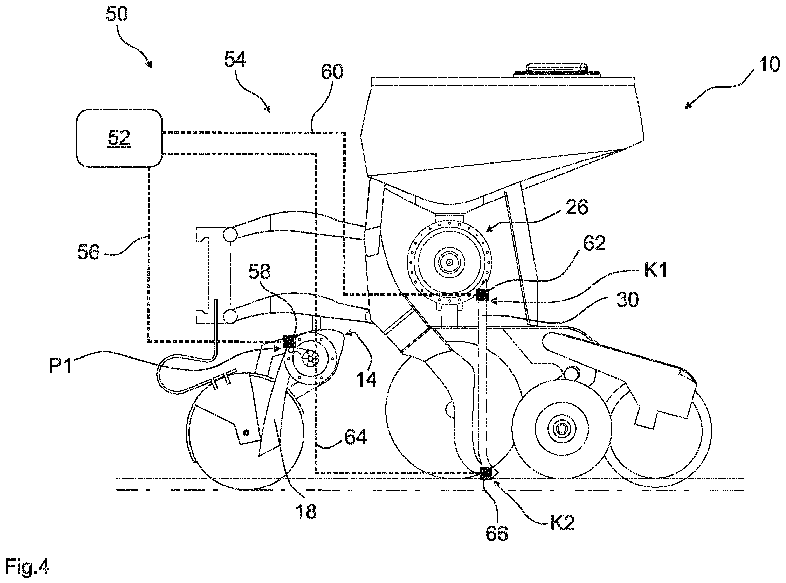

Die Fig. 3 und 4 zeigen ein Ausbringaggregat 10, welches mit einem drei Sensoren 58, 62, 66 aufweisenden Detektionssystem 54 ausgestattet ist.

Der Portionssensor 58 ist über die Leitung 56 mit der dem Steuerungssystem 52 verbunden und dazu eingerichtet, den Portionspräsenzzeitpunkt an dem Portionsdetektionsort P1 indirekt über die Winkelstellung eines Portionierelements 16 der Portioniereinrichtung 14 zu bestimmen. Der Kornsensor 62 ist über die Leitung 60 mit dem Steuerungssystem 52 verbunden und dazu eingerichtet, den Kornpräsenzzeitpunkt an dem Korndetektionsort K1 über eine optische Lichtschranke zu bestimmen.

Der Portionspräsenzzeitpunkt der erzeugten Düngerportion P an dem Portionsdetektionsort P2 und der Kornpräsenzzeitpunkt des vereinzelten Saatkorns K an dem Korndetektionsort K2 werden über den Ergänzungssensor 66 des Detektionssystems 64 erfasst. Bei dem Ergänzungssensor 66 handelt es sich um einen Anbausensor, welcher an der Düngerförderleitung 18 und an der Kornförderleitung 30 befestigbar ist.

Die Fig. 3 zeigt einen Zustand, in welchem der Ergänzungssensor 66 an der Düngerförderleitung 18 befestigt ist und den Austritt der Düngerportion P aus der Abgabeöffnung der Düngerförderleitung 18 erfasst. Der auf diese Weise erfasste Portionspräsenzzeitpunkt wird dem Steuerungssystem 52 über die Leitung 64 zur Verfügung gestellt.

Bei dem in der Fig. 4 dargestellten Zustand ist der Ergänzungssensor 66 an der Kornförderleitung 30 befestigt. In diesem Fall erfasst der Ergänzungssensor 66 den Austrittszeitpunkt, an welchem das vereinzelte Saatkorn K die Kornförderleitung 30 verlässt. Der auf diese Weise erfasste Kornpräsenzzeitpunkt am Korndetektionsort K2 wird dem Steuerungssystem 52 über die Leitung 60 zur Verfügung gestellt.

Die Förderdauer des vereinzelten Saatkorns K und die Förderdauer der erzeugten Düngerportion P werden somit unter Verwendung desselben Ergänzungssensors 66 ermittelt, wobei eine zeitversetzte Ermittlung erforderlich ist, da der Ergänzungssensor 66 entweder an der Düngerförderleitung 18 oder an der Kornförderleitung 30 zu befestigen ist.

Das Steuerungssystem 52 ermittelt dann auf Grundlage der erfassten Kornpräsenzzeitpunkte eine saatgutspezifische maschineninterne Förderdauer des vereinzelten Saatkorns K in der Ausbringmaschine und auf Grundlage der erfassten Portionspräsenzzeitpunkte eine düngerspezifische maschineninterne Förderdauer der erzeugten Düngerportionen P in der Ausbringmaschine. Der Vereinzelungseinrichtung 26 und der Portioniereinrichtung 14 werden dann ein Betriebsverhalten vorgegeben, welches die maschineninterne Förderdauer des Saatkorns K und der Düngerportion P derart berücksichtigt, dass eine vorgegebene örtliche Ablagebeziehung von Saatkörnern K und Düngerportionen P auf der landwirtschaftlichen Nutzfläche N erzielt wird. Diese vorgegebene örtliche Ablagebeziehung kann beispielsweise ein vorgegebener Längsabstand sein, wobei der Längsabstand von Saatkörnern K und Düngerportionen P auf der landwirtschaftlichen Nutzfläche auch null sein kann.

### Bezugszeichenliste

- 10: Ausbringaggregat
- 12: Halterung
- 14: Portioniereinrichtung
- 16: Portionierelement
- 18: Düngerförderleitung
- 20: Schneidscheibe
- 22: Düngeschar
- 24: Vorratsbehälter
- 26: Vereinzelungseinrichtung
- 28: Vereinzelungselement
- 30: Kornförderleitung
- 32: Schneidscheibe
- 34: Säschar

- 50: Kalibriersystem
- 52: Steuerungssystem
- 54: Detektionssystem
- 56, 56a, 56b: Leitungen
- 58, 58a, 58b: Portionssensoren
- 60, 60a, 60b: Leitungen
- 62, 62a, 62b: Kornsensoren
- 64: Leitung
- 66: Ergänzungssensor

- P: Düngerportionen
- P1, P2: Portionsdetektionsorte
- N: Nutzfläche
- K: Saatkörner
- K1, K2: Korndetektionsorte
- Δx: Ablagebeziehung

## Patentansprüche

1. Verfahren zum Abstimmen des Betriebs einer Vereinzelungseinrichtung (26) und des Betriebs einer Portioniereinrichtung (14) einer landwirtschaftlichen Ausbringmaschine aufeinander zur Erzielung einer vorgegebenen örtlichen Ablagebeziehung (Δx) beim Ablegen von mittels der Vereinzelungseinrichtung (26) vereinzelten Saatkörnern (K) und mittels der Portioniereinrichtung (14) erzeugten Düngerportionen (P) auf eine landwirtschaftliche Nutzfläche (N), wobei die Portioniereinrichtung (14) ein rotatorisch angetriebenes und als Portionierflügel ausgebildetes Portionierelement (16), welches während einer Drehbewegung Düngerkörner einsammelt und zu einer Düngerportion (P) zusammenführt, oder ein Portionierventil, welches beim Öffnen eine Düngerportion (P) abgibt, umfasst, wobei das Verfahren folgenden Schritt umfasst:
- Erfassen von zumindest einem Kornpräsenzzeitpunkt eines vereinzelten Saatkorns (K) an einem Korndetektionsort (K1, K2) und von zumindest einem Portionspräsenzzeitpunkt einer erzeugten Düngerportion (P) an einem Portionsdetektionsort (P1, P2) mittels eines Detektionssystems (54);
wobei ein mit der Vereinzelungseinrichtung (26) und/oder der Portioniereinrichtung (14) signalleitend verbundenes Steuerungssystem (52) zur Erzielung der vorgegebenen örtlichen Ablagebeziehung (Δx) von Saatkörnern (K) und Düngerportionen (P) der Vereinzelungseinrichtung (26) und/oder der Portioniereinrichtung (14) zumindest temporär ein Betriebsverhalten vorgibt, welches das Steuerungssystem (52) auf Grundlage des zumindest einen erfassten Kornpräsenzzeitpunkts und des zumindest einen erfassten Portionspräsenzzeitpunkts ermittelt.

2. Verfahren nach Anspruch 1,
**dadurch gekennzeichnet, dass**
- die von der Vereinzelungseinrichtung (26) vereinzelten Saatkörner (K) zu zeitlich voneinander beabstandeten Kornabgabezeitpunkten von der Vereinzelungseinrichtung (26), insbesondere in eine Kornförderleitung, abgegeben werden; und/oder
- die von der Portioniereinrichtung (14) erzeugten Düngerportionen (P) zu zeitlich voneinander beabstandeten Düngerabgabezeitpunkten von der Portioniereinrichtung (14), insbesondere in eine Düngerförderleitung, abgegeben werden;
wobei über das von dem Steuerungssystem (52) vorgegebene Betriebsverhalten vorzugsweise eine Anpassung des Zeitversatzes zwischen den Kornabgabezeitpunkten und den Düngerabgabezeitpunkten veranlasst wird.

3. Verfahren nach Anspruch 1 oder 2,
**dadurch gekennzeichnet, dass** das Detektionssystem (54) zumindest zwei Kornpräsenzzeitpunkte des vereinzelten Saatkorns (K) an voneinander beabstandeten Korndetektionsorten (K1, K2) und/oder zumindest zwei Portionspräsenzzeitpunkte der erzeugten Düngerportion (P) an voneinander beabstandeten Portionsdetektionsorten (P1, P2) erfasst; wobei das Steuerungssystem (52) das der Vereinzelungseinrichtung (26) und/oder der Portioniereinrichtung (14) vorgegebene Betriebsverhalten auf Grundlage der zumindest zwei erfassten Kornpräsenzzeitpunkte und/oder der zumindest zwei erfassten Portionspräsenzzeitpunkte ermittelt.

4. Verfahren nach Anspruch 3,
**dadurch gekennzeichnet, dass** das Steuerungssystem (52) auf Grundlage der zumindest zwei erfassten Kornpräsenzzeitpunkte eine saatgutspezifische maschineninterne Förderdauer des vereinzelten Saatkorns (K) in der Ausbringmaschine, eine saatgutspezifische maschinenexterne Flugdauer des vereinzelten Saatkorns (K) nach der Abgabe durch die Ausbringmaschine und/oder eine einen maschineninternen Förderanteil und einen maschinenexternen Fluganteil umfassende saatgutspezifische Transportdauer ermittelt.

5. Verfahren nach Anspruch 3 oder 4,
**dadurch gekennzeichnet, dass** das Steuerungssystem (52) auf Grundlage der zumindest zwei erfassten Portionspräsenzzeitpunkte eine düngerspezifische maschineninterne Förderdauer der erzeugten Düngerportion (P) in der Ausbringmaschine, eine düngerspezifische maschinenexterne Flugdauer der erzeugten Düngerportion (P) nach der Abgabe durch die Ausbringmaschine und/oder eine einen maschineninternen Förderanteil und einen maschinenexternen Fluganteil umfassende düngerspezifische Transportdauer ermittelt.

6. Verfahren nach einem der vorstehenden Ansprüche,
**dadurch gekennzeichnet, dass**
- zumindest ein Kornpräsenzzeitpunkt des vereinzelten Saatkorns (K) mittels eines maschineninternen Kornsensors (62, 62a, 62b) des Detektionssystems (54) erfasst wird; und/oder
- zumindest ein Portionspräsenzzeitpunkt der erzeugten Düngerportion (P) über einen maschineninternen Portionssensor (58, 58a, 58b) des Detektionssystems (54) erfasst wird.

7. Verfahren nach Anspruch 3,
**dadurch gekennzeichnet, dass**
- die zumindest zwei Kornpräsenzzeitpunkte des vereinzelten Saatkorns (K) mittels mehrerer entlang eines maschineninternen Förderpfads des vereinzelten Saatkorns (K) angeordneter maschineninterner Kornsensoren (62, 62a, 62b) des Detektionssystems (54) erfasst werden; und/oder
- die zumindest zwei Portionspräsenzzeitpunkte der erzeugten Düngerportion (P) mittels mehrerer entlang eines maschineninternen Förderpfads der erzeugten Düngerportionen (P) angeordneter maschineninterner Portionssensoren (58, 58a, 58b) des Detektionssystems (54) erfasst werden.

8. Verfahren nach einem der vorstehenden Ansprüche,
**dadurch gekennzeichnet, dass** zumindest ein Kornpräsenzzeitpunkt des vereinzelten Saatkorns (K) und/oder zumindest ein Portionspräsenzzeitpunkt der erzeugten Düngerportion (P) mittels eines Ergänzungssensors (66) des Detektionssystems (54) erfasst wird.

9. Verfahren nach Anspruch 8,
**dadurch gekennzeichnet, dass** derselbe Ergänzungssensor (66) zeitlich beabstandet zum Erfassen zumindest eines Kornpräsenzzeitpunkts des vereinzelten Saatkorns (K) und zum Erfassen zumindest eines Portionspräsenzzeitpunkts der erzeugten Düngerportion (P) eingesetzt wird.

10. Verfahren nach Anspruch 8,
**dadurch gekennzeichnet, dass** ein erster Ergänzungssensor (66) zum Erfassen zumindest eines Kornpräsenzzeitpunkts des vereinzelten Saatkorns (K) und ein zweiter Ergänzungssensor (66) zum Erfassen zumindest eines Portionspräsenzzeitpunkts der erzeugten Düngerportion (P) eingesetzt wird.

11. Verfahren nach einem der vorstehenden Ansprüche,
**dadurch gekennzeichnet, dass** zumindest ein Kornpräsenzzeitpunkt des vereinzelten Saatkorns (K) und/oder zumindest ein Portionspräsenzzeitpunkt der erzeugten Düngerportion (P) mittels einer Kamera des Detektionssystems (54) erfasst wird.

12. Verfahren nach einem der Ansprüche 1 bis 10,
**dadurch gekennzeichnet, dass** die Fluggeschwindigkeit des vereinzelten Saatkorns (K) und/oder Fluggeschwindigkeit der erzeugten Düngerportion (P) mittels einer Kamera des Detektionssystems (54) erfasst wird.

13. Verfahren nach einem der vorstehenden Ansprüche,
**dadurch gekennzeichnet, dass** mittels eines Ablagesensors des Detektionssystems (54) der Aufprall des vereinzelten Saatkorns (K) in der Saatfurche als Kornpräsenzzeitpunkt und/oder der Aufprall der erzeugten Düngerportion (P) in der Düngerfurche als Portionspräsenzzeitpunkt ermittelt wird.

14. Kalibriersystem (50) für eine landwirtschaftliche Ausbringmaschine zur Erzielung einer vorgegebenen örtlichen Ablagebeziehung (Δx) beim Ablegen von vereinzelten Saatkörner (K) und erzeugten Düngerportionen (P) auf eine landwirtschaftliche Nutzfläche (N), mit
- einer Vereinzelungseinrichtung (26) zum Vereinzeln von Saatkörnern;
- einer Portioniereinrichtung (14) zum Erzeugen von Düngerportionen (P) wobei die Portioniereinrichtung (14) ein rotatorisch angetriebenes und als Portionierflügel ausgebildetes Portionierelement (16), welches während einer Drehbewegung Düngerkörner einsammelt und zu einer Düngerportion (P) zusammenführt, oder ein Portionierventil, welches beim Öffnen eine Düngerportion (P) abgibt, umfasst; und
- einem Steuerungssystem (52), welches mit der Vereinzelungseinrichtung (26) und/oder der Portioniereinrichtung (14) signalleitend verbunden und dazu eingerichtet ist, den Betrieb der Vereinzelungseinrichtung (26) und den Betrieb der Portioniereinrichtung (14) aufeinander abzustimmen;
das Kalibiersystem umfasst ferner ein Detektionssystem (54), welches dazu eingerichtet ist, zumindest einen Kornpräsenzzeitpunkt eines vereinzelten Saatkorns (K) an einem Korndetektionsort (K1, K2) und zumindest einen Portionspräsenzzeitpunkt einer erzeugten Düngerportion (P) an einem Portionsdetektionsort (P1, P2) zu ermitteln;
wobei das Steuerungssystem (52) dazu eingerichtet ist, zur Erzielung der vorgegebenen örtlichen Ablagebeziehung (Δx) der Vereinzelungseinrichtung (26) und/oder der Portioniereinrichtung (14) zumindest temporär ein Betriebsverhalten vorzugeben, welches das Steuerungssystem (52) auf Grundlage des zumindest einen erfassten Kornpräsenzzeitpunkts und des zumindest einen erfassten Portionspräsenzzeitpunkts ermittelt.

15. Kalibriersystem (50) nach Anspruch 14,
**dadurch gekennzeichnet, dass** das Kalibriersystem (50) dazu eingerichtet ist, das Verfahren nach einem der Ansprüche 1 bis 12 auszuführen.

## Claims

1. Method for coordinating the operation of a singling device (26) and the operation of a portioning device (14) of an agricultural spreading machine for achieving a predetermined local placement relationship (Δx) when placing grains of seed (K) singled by the singling device (26) and fertilizer portions (P) produced by the portioning device (14) on an agricultural area (N), wherein the portioning device (14) comprises a rotatably driven portioning element (16) designed as a portioning wing, which collects grains of fertilizer during a rotational movement and merges them into a fertilizer portion (P), or a portioning valve, which dispenses a fertilizer portion (P) when opened, wherein the method comprises the following step:
- detecting at least one grain presence time point of a singled grain of seed (K) at a grain detection location (K1, K2) and at least one portion presence time point of a produced fertilizer portion (P) at a portion detection location (P1, P2) by means of a detection system (54);
wherein a control system (52) connected to the singling device (26) and/or the portioning device (14) in a signal-conducting manner predetermines, at least temporarily, an operating behavior for the singling device (26) and/or the portioning device (14) for achieving the predetermined local placement relationship (Δx) of grains of seed (K) and fertilizer portions (P), which operating behavior is determined by the control system (52) on the basis of the at least one detected grain presence time point and the at least one detected portion presence time point.

2. Method according to claim 1,
**characterized in that**
- the grains of seed (K) singled by the singling device (26) are discharged, in particular into a seed conveyor line, by the singling device (26) at temporal spaced-apart grain discharge time points; and/or
- the fertilizer portions (P) produced by the portioning device (14) are discharged, in particular into a fertilizer conveyor line, by the portioning device (14) at temporal spaced-apart fertilizer discharge time points;
wherein by the operating behavior predetermined by the control system (52) preferably an adjustment of the time offset between the grain discharge time points and the fertilizer discharge time points is caused.

3. Method according to claim 1 or 2,
**characterized in that** the detection system (54) detects at least two grain presence time points of the singled grain of seed (K) at spaced-apart grain detection locations (K1, K2) and/or at least two portion presence time points of the produced fertilizer portion (P) at spaced-apart portion detection locations (P1, P2);
wherein the control system (52) determines the operating behavior predetermined for the singling device (26) and/or the portioning device (14) on the basis of the at least two detected grain presence time points and/or the at least two detected portion presence time points.

4. Method according to claim 3,
**characterized in that** the control system (52) determines, on the basis of the at least two detected grain presence time points, a seed-specific machine-internal conveying duration of the singled grain of seed (K) in the spreading machine, a seed-specific machine-external flight duration of the singled grain of seed (K) after the discharging by the spreading machine and/or a seed-specific transport duration comprising a machine-internal conveying portion and a machine-external flight portion.

5. Method according to claim 3 or 4,
**characterized in that** the control system (52) determines, on the basis of the at least two detected portion presence time points, a fertilizer-specific machine-internal conveying duration of the produced fertilizer portion (P) in the spreading machine, a fertilizer-specific machine-external flight duration of the produced fertilizer portion (P) after the discharging by the spreading machine and/or a fertilizer-specific transport duration comprising a machine-internal conveying portion and a machine-external flight portion.

6. Method according to one of the preceding claims,
**characterized in that**
- at least one grain presence time point of the singled grain of seed (K) is detected by means of a machine-internal grain sensor (62, 62a, 62b) of the detection system (54); and/or
- at least one portion presence time point of the produced fertilizer portion (P) is detected via a machine-internal portion sensor (58, 58a, 58b) of the detection system (54).

7. Method according to claim 3,
**characterized in that**
- the at least two grain presence time points of the singled grain of seed (K) are detected by means of several machine-internal grain sensors (62, 62a, 62b) of the detection system (54) arranged along a machine-internal conveyor path of the singled grain of seed (K); and/or
- the at least two portion presence time points of the produced fertilizer portion (P) are detected by means of several machine-internal portion sensors (58, 58a, 58b) of the detection system (54) arranged along a machine-internal conveyor path of the produced fertilizer portions (P).

8. Method according to one of the preceding claims,
**characterized in that** at least one grain presence time point of the singled grain of seed (K) and/or at least one portion presence time point of the produced fertilizer portion (P) is detected by means of a supplementary sensor (66) of the detection system (54).

9. Method according to claim 8,
**characterized in that** the same supplementary sensor (66) is used temporally spaced-apart for detecting at least one grain presence time point of the singled grain of seed (K) and for detecting at least one portion presence time point of the produced fertilizer portion (P).

10. Method according to claim 8,
**characterized in that** a first supplementary sensor (66) is used for detecting at least one grain presence time point of the singled grain of seed (K) and a second supplementary sensor (66) is used for detecting at least one portion presence time point of the produced fertilizer portion (P).

11. Method according to one of the preceding claims,
**characterized in that** at least one grain presence time point of the singled grain of seed (K) and/or at least one portion presence time point of the produced fertilizer portion (P) is detected by means of a camera of the detection system (54).

12. Method according to one of claims 1 to 10,
**characterized in that** the flight speed of the singled seed (K) and/or the flight speed of the produced fertilizer portion (P) is detected by means of a camera of the detection system (54).

13. Method according to one of the preceding claims,
**characterized in that** the impact of the singled grain of seed (K) in the seed furrow is determined as grain presence time point and/or the impact of the produced fertilizer portion (P) in the fertilizer furrow is determined as portion presence time point by means of a placement sensor of the detection system (54).

14. Calibration system (50) for an agricultural spreading machine for achieving a predetermined local placement relationship (Δx) when placing singled grains of seed (K) and produced fertilizer portions (P) on an agricultural area (N), with
- a singling device (26) for singling grains of seed;
- a portioning device (14) for producing fertilizer portions (P), wherein the portioning device (14) comprises a rotatably driven portioning element (16) designed as a portioning wing, which collects grains of fertilizer during a rotational movement and merges them into a fertilizer portion (P), or a portioning valve, which dispenses a fertilizer portion (P) when opened; and
- a control system (52) connected to the singling device (26) and/or the portioning device (14) in a signal-conducting manner and is set up to coordinate the operation of the singling device (26) and the operation of the portioning device (14);
the calibration system further comprises a detection system (54) which is set up to determine at least one grain presence time point of a singled grain of seed (K) at a grain detection location (K1, K2) and at least one portion presence time point of a produced fertilizer portion (P) at a portion detection location (P1, P2);
wherein the control system (52), for achieving the predetermined local placement relationship (Δx), is set up to predetermine, at least temporarily, an operating behavior for the singling device (26) and/or the portioning device (14) which operating behavior is determined by the control system (52) on the basis of the at least one detected grain presence time point and the at least one detected portion presence time point.

15. Calibration system (50) according to claim 14,
**characterized in that** the calibration system (50) is set up to carry out the method according to one of claims 1 to 12.

## Revendications

1. Procédé pour adapter l'un à l'autre le fonctionnement d'un dispositif d'individualisation (26) et le fonctionnement d'un dispositif de portionnement (14) d'une machine d'épandage agricole pour obtenir un rapport de dépose locale prédéfini (Δx) lors de la dépose de graines de semence (K) séparées au moyen du dispositif d'individualisation (26) et de portions d'engrais (P) générées au moyen du dispositif de portionnement (14) sur une surface agricole utile (N), dans lequel le dispositif de portionnement (14) comprend un élément de portionnement (16) entraîné en rotation et conçu sous forme d'aile de portionnement qui rassemble des graines de semence au cours d'un mouvement de rotation et les réunit en une portion d'engrais (P), ou une soupape de portionnement qui, en s'ouvrant, délivre une portion d'engrais (P), dans lequel ledit procédé comprend l'étape suivante :
- saisie d'au moins un moment de présence de graine d'une graine de semence (K) séparée à un emplacement de détection de graine (K1, K2), et d'au moins un moment de présence de portion d'une portion d'engrais (P) générée à un emplacement de détection de portion (P1, P2) au moyen d'un système de détection (54) ;
dans lequel un système de commande (52) relié par transmission de signal au dispositif d'individualisation (26) et/ou au dispositif de portionnement (14) pour obtenir un rapport de dépose locale prédéfini (Δx) de graines de semence (K) et de portions d'engrais (P) du dispositif d'individualisation (26) et/ou du dispositif de portionnement (14) définit au moins temporairement un comportement de fonctionnement que calcule le système de commande (52) sur la base dudit au moins un moment de présence de graine saisi et dudit au moins un moment de présence de portion saisi.

2. Procédé selon la revendication 1,
**caractérisé en ce que**
- les graines de semence (K) séparées par le dispositif d'individualisation (26) sont délivrées par le dispositif d'individualisation (26), notamment dans un conduit de transport de graines, à des moments de délivrance de graines espacés temporellement les uns des autres ; et/ou
- les portions d'engrais (P) générées par le dispositif de portionnement (14) sont délivrées par le dispositif de portionnement (14), notamment dans un conduit de transport d'engrais, à des moments de délivrance d'engrais espacés temporellement les uns des autres ;
dans lequel, par l'intermédiaire du comportement de fonctionnement prédéfini par le système de commande (52), on provoque de préférence une adaptation du décalage temporel entre les moments de délivrance des graines et les moments de délivrance d'engrais.

3. Procédé selon la revendication 1 ou 2,
**caractérisé en ce que** le système de détection (54) enregistre au moins deux moments de présence de graine de la graine de semence (K) séparée à des emplacements de détection de graines (K1, K2) espacés les uns des autres, et/ou au moins deux moments de présence de portion de la portion d'engrais (P) générée à des emplacements de détection de portion (P1, P2) espacés les uns des autres ;
dans lequel le système de commande (52) détermine le comportement de fonctionnement prédéfini pour le dispositif d'individualisation (26) et/ou le dispositif de portionnement (14) sur la base desdits au moins deux moments de présence de graine saisis et/ou desdits au moins deux moments de présence de portion saisis.

4. Procédé selon la revendication 3,
**caractérisé en ce que** le système de commande (52) détermine, sur la base desdits au moins deux moments de présence de graine saisis, une durée de transport interne à la machine et spécifique aux semences, de la graine de semence (K) séparée dans la machine d'épandage, une durée de vol externe à la machine et spécifique aux semences, de la graine de semence (K) séparée après délivrance par la machine d'épandage, et/ou une durée de transport externe à la machine et spécifique aux semences comprenant une partie de transport interne à la machine et une partie de vol externe à la machine.

5. Procédé selon la revendication 3 ou 4,
**caractérisé en ce que** le système de commande (52) détermine, sur la base desdits au moins deux moments de présence de portion saisis, une durée de transport interne à la machine et spécifique aux engrais, de la portion d'engrais (P) générée dans la machine d'épandage, une durée de vol externe à la machine et spécifique aux engrais, de la portion d'engrais (P) générée après délivrance par la machine d'épandage, et/ou une durée de transport externe à la machine et spécifique aux semences comprenant une partie de transport interne à la machine et une partie de vol externe à la machine.

6. Procédé selon l'une quelconque des revendications précédentes, **caractérisé en ce que**
- au moins un moment de présence de graine de la graine de semence (K) séparée est saisi au moyen d'un capteur de graine (62, 62a, 62b), interne à la machine, du système de détection (54) ; et/ou
- au moins un moment de présence de portion de la portion d'engrais (P) générée est saisi au moyen d'un capteur de portion (58, 58a, 58b), interne à la machine, du système de détection (54).

7. Procédé selon la revendication 3,
**caractérisé en ce que**
- lesdits au moins deux moments de présence de graine de la graine de semence (K) séparée sont saisis au moyen de plusieurs capteurs de graines (62, 62a, 62b), internes à la machine, du système de détection (54) qui sont agencés le long d'un chemin de convoyage interne à la machine de la graine (K) séparée ; et/ou
- lesdits au moins deux moments de présence de portion de la portion d'engrais (P) générée sont saisis au moyen de plusieurs capteurs de portions (58, 58a, 58b), internes à la machine, du système de détection (54) qui sont agencés le long d'un chemin de convoyage interne à la machine des portions d'engrais (P) générées.

8. Procédé selon l'une quelconque des revendications précédentes, **caractérisé en ce qu'**au moins un moment de présence de graine de la graine de semence (K) séparée et/ou au moins un moment de présence de portion de la portion d'engrais (P) générée sont saisis au moyen d'un capteur complémentaire (66) du système de détection (54).

9. Procédé selon la revendication 8,
**caractérisé en ce que** le même capteur complémentaire (66) est mis en oeuvre, espacé temporellement, pour saisir au moins un moment de présence de graine de la graine de semence (K) séparée et pour saisir au moins un moment de présence de portion de la portion d'engrais (P) générée.

10. Procédé selon la revendication 8,
**caractérisé en ce qu'**un premier capteur complémentaire (66) est mis en oeuvre pour saisir au moins un moment de présence de graine de la graine de semence (K) séparée et un deuxième capteur complémentaire (66) pour saisir au moins un moment de présence de portion de la portion d'engrais (P) générée.

11. Procédé selon l'une quelconque des revendications précédentes, **caractérisé en ce qu'**au moins un moment de présence de graine de la graine de semence (K) séparée et/ou au moins un moment de présence de portion de la portion d'engrais (P) générée sont saisis au moyen d'un appareil photographique du système de détection (54).

12. Procédé selon l'une quelconque des revendications 1 à 10, **caractérisé en ce que** la vitesse de vol de la graine de semence (K) séparée et/ou vitesse de vol de la portion d'engrais (P) générée sont saisies au moyen d'un appareil photographique du système de détection (54).

13. Procédé selon l'une quelconque des revendications précédentes, **caractérisé en ce qu'**un capteur de dépose du système de détection (54) permet de déterminer l'impact de la graine de semence (K) séparée dans le sillon pour semence en tant que moment de présence de graine, et/ou l'impact de la portion d'engrais (P) générée dans le sillon pour engrais en tant que moment de présence de portion.

14. Système d'étalonnage (50) pour une machine d'épandage agricole, destiné à obtenir un rapport de dépose locale (Δx) prédéfini lors de la dépose de graines de semence (K) séparées et de portions d'engrais (P) générées sur une surface agricole utile (N), comprenant
- un dispositif d'individualisation (26) pour séparer des graines de semence ;
- un dispositif de portionnement (14) pour générer des portions d'engrais (P), dans lequel ledit dispositif de portionnement (14) comprend un élément de portionnement (16) entraîné en rotation et conçu sous forme d'aile de portionnement qui, au cours d'un mouvement de rotation, rassemble des graines d'engrais et les réunit pour former une portion d'engrais (P), ou une soupape de portionnement qui délivre, en s'ouvrant, une portion d'engrais (P) ; et
- un système de commande (52) qui est relié, par transmission de signal, au dispositif d'individualisation (26) et/ou au dispositif de portionnement (14) et qui est destiné à adapter l'un à l'autre le fonctionnement du dispositif d'individualisation (26) et le fonctionnement du dispositif de portionnement (14) ;
le système d'étalonnage comprend en outre un système de détection (54) qui est destiné à déterminer au moins un moment de présence de graine d'une graine de semence (K) séparée à un emplacement de détection de graine (K1, K2) et au moins un moment de présence de portion d'une portion d'engrais (P) générée à un emplacement de détection de portion (P1, P2) ;
dans lequel le système de commande (52) est destiné, pour obtenir le rapport de dépose locale prédéfini (Δx) du dispositif d'individualisation (26) et/ou du dispositif de portionnement (14), à définir au moins temporairement un comportement de fonctionnement que détermine le système de commande (52) sur la base dudit au moins un moment de présence de graine saisi et dudit au moins un moment de présence de portion saisi.

15. Système d'étalonnage (50) selon la revendication 14,
**caractérisé en ce que** ledit système d'étalonnage (50) est destiné à exécuter le procédé selon l'une quelconque des revendications 1 à 12.
